**Europäisches Patentamt**

**European Patent Office**

**Office européen des brevets**

(19)

(11) Veröffentlichungsnummer: **0 017 755**
A1

# (12) EUROPÄISCHE PATENTANMELDUNG

(21) Anmeldenummer: 80101262.6

(22) Anmeldetag: 12.03.80

(51) Int. Cl.³: **G 07 C 5/08**, G 01 P 1/12

(30) Priorität: 10.04.79 DE 2914411
15.02.80 DE 3005629

(43) Veröffentlichungstag der Anmeldung: 29.10.80
Patentblatt 80/22

(84) Benannte Vertragsstaaten: CH FR GB SE

(71) Anmelder: **AUDI NSU AUTO UNION Aktiengesellschaft, Postfach 220 Ettingerstrasse, D-8070 Ingolstadt (DE)**

(72) Erfinder: **Heinle, Karl W., Sustrisstrasse 22, D-8070 Ingolstadt (DE)**
Erfinder: **Pagel, Ernst-Olav, Dr., Bergstrasse 5, D-8079 Böhmfeld (DE)**

(54) **Vorrichtung zum Registrieren von Fahrzuständen eines Kraftfahrzeugs, insbesondere des Bremszustandes.**

(57) Eine Registriervorrichtung enthält einen Fahrzustandssensor (4), welcher bei Vorliegen eines vorbestimmten Fahrzustandes ein Zustandssignal erzeugt, das einen Zähler (8), ein elektronisches oder ein elektromechanisches Schieberegister als Registriereinheit ansteuert. Im Falle der Verwendung der Vorrichtung zum Registrieren eines Bremszustandes ist ein Verzögerungsschalter (20) vorgesehen, der die Registriereinheit bei Überschreiten eines vorbestimmten Verzögerungswertes verriegelt.

**AUDI NSU AUTO UNION**
Aktiengesellschaft

Ingolstadt, den 29. Febr. 1980
IP 1587/1657 EP   DrBa/Dö

Vorrichtung zum Registrieren von Fahrzuständen eines Kraftfahrzeugs, insbesondere des Bremszustandes

Die Erfindung betrifft eine Vorrichtung zum Registrieren von
Fahrzuständen eines Kraftfahrzeugs, insbesondere des Bremszustandes eines mit einer Antiblockierbremsanlage ausgerüsteten Kraftfahrzeugs.

Ein Problem, das bei einem mit einer Antiblockierbremsanlage
ausgerüsteten Kraftfahrzeug besteht, liegt darin, daß sich bei
einem Unfall mit einem solchen Fahrzeug nicht nachweisen läßt,
ob das Fahrzeug vor dem Unfall abgebremst wurde. Eine Untersuchung des Unfallhergangs bzw. eine Klärung der Schuldfrage ist
somit erschwert.

Eine Vorrichtung zur Aufzeichnung von Daten, die die Bewegung
sowohl des Fahrers als auch des Fahrzeuges vor und während
Unfällen festhält, wurde unter der Bezeichnung "Drive-Recorder" bekannt (VDI-Nachrichten, Nr. 16/21.04.78, Seite 15 und
Seite 30). Über Sensoren, die an verschiedenen Punkten im
Kraftfahrzeug angebracht sind, und über ein Aufzeichnungsgerät hält der Drive-Recorder die letzten 25 Sekunden des Fahrgeschehens vor einer plötzlichen Krafteinwirkung von außen
fest. Dieses einem Flugdatenschreiber nachgebildeten Gerät benutzt offensichtlich zur Aufzeichnung ein mechanisch angetriebenes Endlos-Tonband oder eine Magnetscheibe. Die Vorgaben für
dieses Gerät bei der Verwendung zur Aufzeichnung der Bremszeit
in einem Kraftfahrzeug mit Antiblockiereinrichtung sind

1. sichere Funktion für die ganze Lebensdauer des Fahrzeuges
   bei den zum Teil extremen Betriebsbedingungen im Fahrzeug,
   wie große Hitze und Kälte im Fahrgastraum und starke Stoßbeschleunigungen,

- 2 -

2. kein, höchstens geringer Wartungsaufwand,

3. sichere Speicherung der Daten, auch bei einem Unfall.

Diese Forderungen sind bei dem bekannten Gerät nur mit erheblichen Aufwand zu erfüllen.

Der Erfindung liegt die Aufgabe zugrunde, eine in ihrem Aufbau einfache Vorrichtung zu schaffen, mit der Fahrzustände eines Kraftfahrzeugs, insbesondere das Abbremsen eines mit einer Antiblockierbremsanlage ausgerüsteten Kraftfahrzeugs, zuverlässig registriert werden können.

Diese Aufgabe wird mit den Merkmalen des Anspruchs 1 gelöst.

An der Registereinheit der erfindungsgemäßen Vorrichtung läßt sich ablesen, ob und wie lange ein vorbestimmter Fahrzustand vorgelegen hat. Die Erfindung ist vielfältig einsetzbar, beispielsweise kann der Fahrzustandssensor auf die Überschreitung einer bestimmten Geschwindigkeit, auf das Überschreiten einer bestimmten Beschleunigung oder auf das Abbremsen ansprechen.

Der Anspruch 2 kennzeichnet eine in ihrem Aufbau einfache Ausführungsform der Vorrichtung, bei der ein in der Registereinheit gespeicherter Bremsvorgang jeweils nach einer vorbestimmten Zeitdauer wieder gelöscht wird, wenn das Fahrzeug beim Abbremsen nicht in einen Zusammenstoß verwickelt wird, der vom Verzögerungsschalter erfaßt wird.

Der Anspruch 3 kennzeichnet eine Ausführungsform der Vorrichtung, bei der der Zählerstand durch die Verwendung eines elektromechanischen Zählers sicher verrastbar ist. Bei vollelektronischen Zählern, beispielsweise mit Flip-Flops arbeitenden Zählern, muß für die Speicherbarkeit des Zählerzustandes eine Energiequelle vorhanden sein, die gerade bei einem Unfall häufig außer Funktion gesetzt wird.

Mit den Merkmalen des Anspruchs 4 wird die Zeitdauer regi-

0017755

striert, während der jeweilige Fahrzustand des Kraftfahrzeugs bestanden hat.

Mit den Merkmalen des Anspruchs 5 wird die Wegstrecke registriert, über die der vorbestimmte Fahrzustand bestanden hat.

Der Anspruch 6 kennzeichnet. eine weitere Ausführungsform
einer zum Registrieren eines Bremsvorgangs geeigneten Vorrichtung. Dabei wird ein Schieberegister von einem ständig
arbeitenden Oszillator und einem Bremssignalgeber angesteuert. Der Bremssignalgeber ändert während des Bremsvorgangs
immer den Zustand des ersten Registerplatzes des Schieberegisters, der durch die Verschiebeimpulse des Oszillators in
das Schieberegister geschoben wird. Während eines Bremsvorganges entsteht somit eine Gruppe von Registerplätzen mit geänderten Zuständen, die durch das Schieberegister wandern und aus
diesem hinausgeschoben werden. Die Länge dieser Gruppe ist ein
Maß für die Dauer des Bremsvorgangs. Bei einem Aufprall des
Fahrzeugs entspricht der beispielsweise in der vorderen Stoßstange angebrachte Beschleunigungsschalter an und unterbricht
den Vorgang des ständigen Durchschiebens durch das Schiebere gister. Die durch einen Bremsvorgang vor dem Aufprall erzeugte
Gruppe stellt dann ein gespeichertes Maß für die Dauer der
Bremszeit vor dem Unfall dar. Die Speicherung kann beispielsweise durch ein Zusatzgerät ausgelesen werden.

Mit den Merkmalen des Anspruchs 7, das Schieberegister als
elektronisches Schieberegister auszubilden, wird eine sehr robuste, kleinbauende und funktionssichere Vorrichtung erreicht.
Beim Einbau einer aufprallsicheren kleinen Pufferbatterie zur
Spannungsversorgung des Schieberegisters gemäß Anspruch 8 wird
die Speicherung in einem elektronischen Schieberegister auch
bei der Zerstörung der Fahrzeugbatterie oder eines Teils der
Verkabelung beibehalten.

Ein elektromechanisches Schieberegister gemäß Anspruch 9 ist
ebenfalls einfach und preiswert herzustellen und erfüllt die
Forderungen nach hoher Lebensdauer und geringer Wartung.

0017755

Gemäß Anspruch 10 wird als einfacher Bremssignalgeber der Bremslichtschalter verwendet. Der Bremslichtschalter wird zwar bereits beim Antippen der Bremse und geringer Bremswirkung geschaltet, vor einem Unfall kann jedoch im Normalfall, insbesondere bei Fahrzeugen mit Antiblockiersystemen, davon ausgegangen werden, daß der Fahrer während des gesamten Bremsvorganges die Bremse stark betätigt und die zuletzt durch den Bremsvorgang gespeicherte Gruppe ein Maß für die Zeitdauer einer Vollbremsung darstellt.

Bei einer verbesserten Ausführung gemäß Anspruch 11 wird die Abspeicherung erst ab einem bestimmten Bremsdruck eingeleitet.

Die Erfindung wird im folgenden anhand einer schematischen Zeichnung beispielsweise und mit weiteren Einzelheiten erläutert.

Es stellen dar:

Fig. 1     eine erste Ausführungsform einer Registriervorrichtung,

Fig. 2     eine zweite Ausführungsform einer Registriervorrichtung,

Fig. 3     eine dritte Ausführungsform einer Registriervorrichtung und

Fig. 4     eine Aufsicht auf einen Teil des elektromechanischen Schieberegisters.

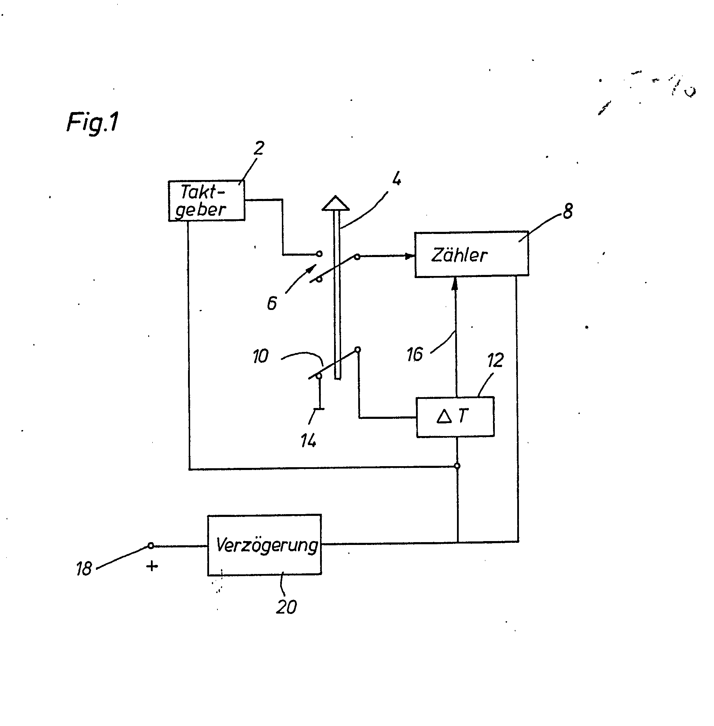

Gemäß Fig. 1 ist ein Taktgeber 2 über einen bei Betätigen eines Bremspedals 4 schließenden Schalter 6 mit einem Zähler 8 verbunden. Der Zähler 8 kann beispielsweise ein elektromechanischer Zähler sein, dessen Zählstand sich beim Einlaufen jedes vom Taktgeber 2 erzeugten Taktimpulses um Eins er-

0017755

höht. Der Taktgeber 2 kann einen eigenen Zeitimpulsgenerator aufweisen, so daß die Taktimpulse konstanten zeitlichen Abstand haben, er kann aber auch von Impulsen angesteuert werden, die beispielsweise von der Drehung eines Fahrzeugrades abgenommen werden und somit einer konstanten, vom Fahrzeug zurückgelegten Strecke entsprechen.

Beim Betätigen des Bremspedals 4 öffnet ein Schalter 10, welcher einen Zeitschalter 12 an Masse 14 legt. Der Zeitschalter 12 ist über eine Leitung 16 mit einem Rücksetzeingang des Zählers 8 verbunden.

Zur Spannungsversorgung des Taktgebers 2, des Zählers 8 und des Zeitschalters 12 ist eine Spannungsquelle 18 vorgesehen, die über einen Verzögerungsschalter 20 mit dem Taktgeber 2, dem Zähler 8 und dem Zeitschalter 12 verbunden ist.

Die Funktion der beschriebenen Schaltung ist folgende:

Der Verzögerungsschalter 20 ist unterhalb einer vorbestimmten Verzögerung des Fahrzeugs geschlossen, so daß der Taktgeber 2 Impulse erzeugt, welche bei betätigtem Bremspedal 4 den Zähler 8 weiterschalten. Wird das Bremspedal 4 losgelassen, ohne daß der Verzögerungsschalter 20 öffnet, so erzeugt der Zeitschalter 12 eine vorbestimmte Zeitdauer nach Schließen des Schalters 10 einen Impuls, der den Zähler 8 auf Null zurücksetzt.

Kommt es bei einem Abbremsvorgang zu einer Kollision, bei der das Fahrzeug eine über der Ansprechschwelle des Verzögerungsschalters 20 liegende Verzögerung erfährt, so öffnet der Verzögerungsschalter 20, wodurch der Taktgeber 2, der Zähler 8 und der Zeitschalter 12 von der Spannungsquelle 18 getrennt werden und der Zählstand des Zählers 8 verriegelt wird. Der der Kollision vorausgehende Bremsvorgang kann somit durch Ablesen des Zählers 8 rekonstruiert werden.

0017755

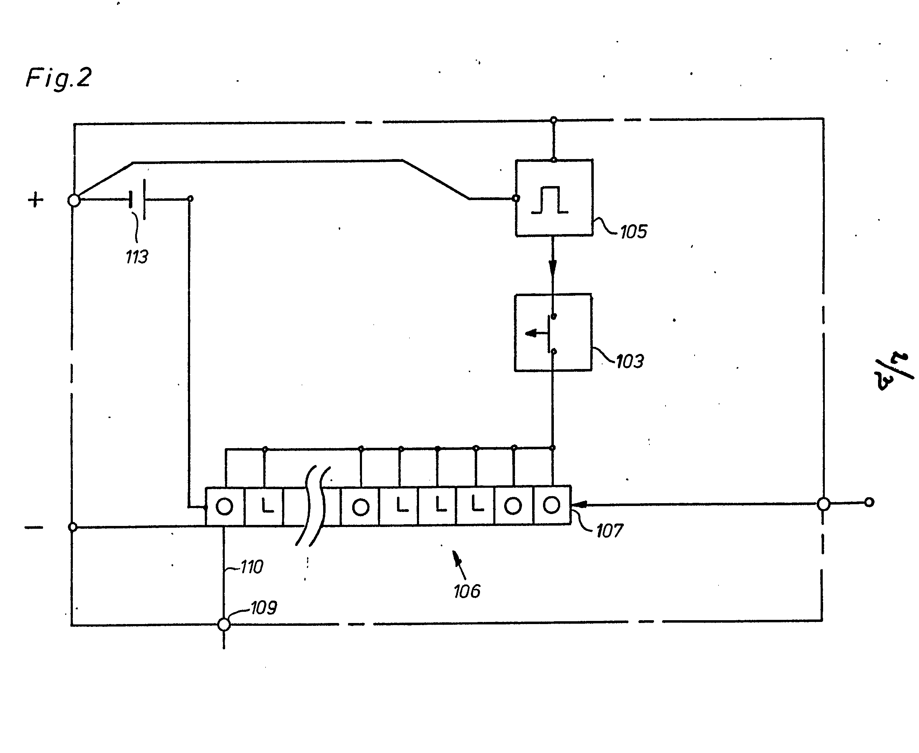

Bei der Ausführungsform gemäß Fig. 2 ist ein elektronisches Schieberegister 101 über einen Beschleunigungsschalter 103 mit einem Oszillator 105 verbunden. Ein weiterer Eingang 107 des Schieberegisters 101 hat Verbindung mit einem nicht dargestellten Bremslichtschalter. Am Punkt 109 liegt eine Abfrageleitung 111 zur Abfrage des Schieberegisterinhalts an. Das Schieberegister 101 wird über eine Pufferbatterie 113 mit Spannung versorgt.

Die Schaltung hat folgende Funktion:

Bei im normalen Fahrbetrieb geschlossenen Beschleunigungsschalter 103 gibt der Oszillator 105 Verschiebeimpulse an das Schieberegister 101. Bei jedem einlaufenden Verschiebeimpuls rückt der Zustand jedes einzelnen Registerplatzes um eine Stelle von rechts nach links. Liegt über den Bremslichtschalter Spannung am Eingang des Schieberegisters 101 an, so wird der normalerweise 0-Zustand des ersten Registerplatzes auf einen L-Zustand gehoben. Durch die ständige Weiterschaltung des Schieberegisters durch die Verschiebeimpulse aus dem Oszillator 105 entstehen somit in Abhängigkeit der Betätigung des Bremslichtschalters zusammenhängende Gruppen von Registerplätzen mit L-Zustand. Die Länge dieser Gruppe sind ein Maß für die zugehörige Bremsdauer. Durch die ständige Weiterschaltung des Schieberegisters wandern diese Gruppen durch das ganze Register und treten am Ende wieder aus. Eine Speicherung der Bremszeit bei einem Unfall wird nun dadurch erreicht, daß der Beschleunigungsschalter 103 beim Aufprall des Fahrzeugs öffnet und die Weiterschaltung des Schieberegisters unterbricht. Bei einer vor dem Unfall erfolgten Bremsung steht dann eine Gruppe von Registerplätzen mit L-Zustand am Eingang des Schieberegisters 101, deren Länge ein Maß für die Bremszeit vor dem Aufprall darstellt. Aus der Bremszeit, dem Straßenzustand und einer Einbeulung am Fahrzeug kann auf die Geschwindigkeit vor der Bremsung geschlossen werden. Zur Speicherung kann beispielsweise ein Schieberegister mit 32 Bit verwendet werde-, das mit 0,5 sec. weitergeschaltet wird. Dabei

0017755

können Bremszeiten von 16 sec. gespeichert werden, die nur bei sehr hohen Ausgangsgeschwindigkeiten bei einer Vollbremsung erreicht werden. Vergrößert man die Zahl der Speicherplätze des Schieberegisters, so kann der Meßzeitraum entsprechend verlängert werden oder das Auflösevermögen der Zeitmessung durch Verkürzung der Taktzeit erhöht werden. Bei einem Ausfall der Fahrzeugbatterie wird der Speicherinhalt des Schieberegisters 101 durch die dann in der Regel noch arbeitende aufprallgeschützte Pufferbatterie 113 erhalten. Durch ein Zusatzgerät kann der Speicherinhalt nach einem Unfall am Punkt 109 abgefragt werden.

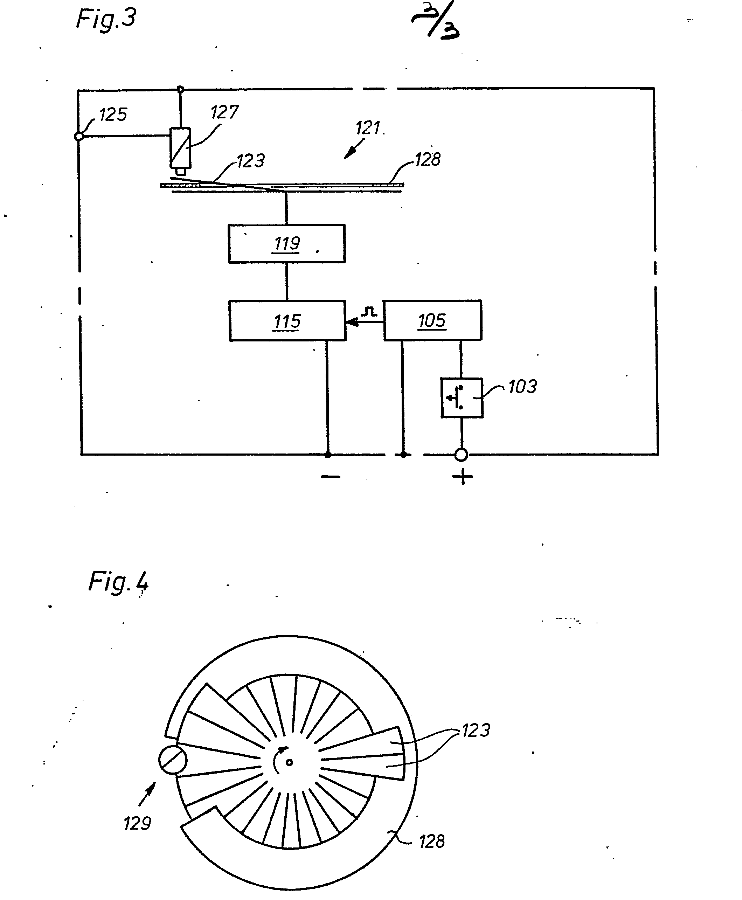

Die in Fig. 3 dargestellte Schaltung mit einem elektromechanischen Schieberegister enthält einen Elektromotor 115, der von einem Oszillator 105 gesteuert wird. Der Elektromtoro 115 treibt über ein Getriebe 119 eine Lamellenscheibe 121, Die Lamellenscheibe ist in Fig. 4 in Draufsicht gezeichnet. Sie besteht aus federnden Lamellen 123, die durch die Wirkung eines vom Bremslichtschalter über Punkt 125 ansteuerbaren Elektromagneten 127 angebbar sind. Unmittelbar über der Lamellenscheibe 121 ist ein feststehender Kragen 128 angeordnet, der im Bereich des Elektromagneten 127 eine Aussparung 129 aufweist. Durch einen Beschleunigungsschalter 103 ist die Versorgungsleitung zum Oszillator 105 unterbrechbar.

Die Anordnung hat folgende Funktion:

Bei normalerweise geschlossenem Beschleunigungsschalter 103 läuft der Elektromotor 115, gesteuert durch den Oszillator 105, zeitsynchron. Über das Getriebe 119 wird damit die Lamellenscheibe 121 gleichmäßig angetrieben. Wenn das Fahrzeug nicht gebremst wird, d.h. der Bremslichtschalter nicht betätigt ist, liegen alle Lamellen 123 in einer Ebene und bewegen sich unter dem Kragen 128. Wenn nun bei einer Bremsung der Elektromagnet 127 über den Bremslichtschalter angesteuert ist, zieht dieser die jeweils unter ihm durchlaufende Lamellen an und hebt sie durch die Aussparung 129 auf die Oberseite des Kragens 128. Durch die fortschreitende, gleichmäßige Drehung der Lamellenscheibe werden somit während einer bestimmten Bremszeit eine ganz bestimmte Anzahl von Lamellen auf die Kragenoberseite gehoben. Nach Beendigung der Bremsung und abgefallenem Elektromagneten 127 bewegen sich die nachfolgenden Lamellen 123 wieder unter dem Kragen 128 durch. Um nun bei einem Unfall eine Speicherung des letzten Bremsvorgangs entsprechenden Lamellenzahl auf der Kragenoberseite, d.h. also der Bremszeit, zu erhalten, wird über einen Beschleunigungsschalter 103, der im Crashfalle auslöst, die Oszillatorversorgung unterbrochen und dadurch der Elektromotor 115 angehalten. Nach einem Unfall kann dann durch einfaches Abzählen der auf der Kragenoberseite liegenden Lamellen 123 des letzten zusammenhängenden Bremsvorganges die Bremszeit vor dem Unfall ermittelt werden. Bei einer Umdrehung der Lamellenscheibe 121 in 15 sec. und bei einer Anzahl von 30 Lamellen 123 ergibt sich eine für ein übliches Fahrzeug ausreichende Auslegung.

# AUDI NSU AUTO UNION

Aktiengesellschaft

Ingolstadt, den 29. Febr. 1980
IP 1587/1657 EP

Vorrichtung zum Registrieren von Fahrzuständen eines Kraftfahrzeugs, insbesondere des Bremszustandes

Patentansprüche:

1. Vorrichtung zum Registrieren von Fahrzuständen eines Kraftfahrzeugs, insbesondere des Bremszustandes eines mit einer
Antiblockierbremsanlage ausgerüsteten Kraftfahrzeugs,
g e k e n n z e i c h n e t   d u r c h   einen Fahrzustandssensor (Bremsschalter 4), welcher bei Vorliegen eines
vorbestimmten Fahrzustandes ein Zustandssignal erzeugt, und
einen Taktgeber (2), welcher bei Vorliegen des Zustandssignals eine Registereinheit (Zähler 8) ansteuert.

2. Vorrichtung nach Anspruch 1,   d a d u r c h   g e k e n n -
z e i c h n e t ,   daß der Fahrzustandssensor durch einen
Bremsschalter (4) gebildet ist, daß die Registereinheit ein
Zähler (8) ist, daß eine Rücksetzeinrichtung (10, 12, 16)
vorgesehen ist, welche den Zähler normalerweise eine vorbestimmte Zeitdauer nach einem Bremsvorgang rücksetzt, und
daß ein Verzögerungsschalter (20) vorgesehen ist, welcher
den Zählstand des Zählers bei Überschreiten eines vorbestimmten Verzögerungswertes verriegelt.

3. Vorrichtung nach Anspruch 1 oder 2,   d a d u r c h   g e -
k e n n z e i c h n e t ,   daß der Zähler (8) ein elektromechanischer Zähler ist.

4. Vorrichtung nach einem der Ansprüche 1 bis 3,   d a d u r c h

0017755

- 10 -

gekennzeichnet, daß der Taktgeber (2) in ihrem zeitlichen Abstand konstante Taktsignale erzeugt.

5. Vorrichtung nach einem der Ansprüche 1 bis 3, d a d u r c h g e k e n n z e i c h n e t , daß der Taktgeber (2) Taktsignale entsprechend einer vom Fahrzeug zurückgelegten Wegstrecke erzeugt.

6. Vorrichtung zum Registrieren des Bremszustandes einer mit einer Antiblockierbremseinrichtung ausgerüsteten Kraftfahrzeuges, g e k e n n z e i c h n e t d u r c h ,

   a) ein Schieberegister (101; 121, 127, 128), bei dem die Registerplätze unterschiedliche Zustände einnehmen können und das beim Einlaufen eines Verschiebeimpulses die Zustände der einzelnen Registerplätze um jeweils einen Registerplatz weiterverschiebt,

   b) einen Oszillator (105), der mit dem Schieberegister verbunden ist und die Schiebeimpulse für das Schieberegister abgibt,

   c) einen mit dem Schieberegister verbundenen Bremssignalgeber (107;125) dessen Tätigkeit den Zustand des ersten Registerplatzes bestimmt,

   d) einen Beschleunigungsschalter (103), der beim Ansprechen die Verschiebung im Schieberegister unterbricht.

7. Vorrichtung nach Anspruch 6, d a d u r c h g e k e n n - z e i c h n e t , daß das Schieberegister ein elektronisches Schieberegister (101) ist, in dem die unterschiedlichen Zustände L- und O-Zustände sind.

8. Vorrichtung nach Anspruch 7, d a d u r c h g e k e n n - z e i c h n e t , daß dem Schieberegister (101) zu dessen Spannungsversorgung eine aufprallsichere Pufferbatterie (113) vorgeschaltet ist.

- 11 -

0017755

9. Vorrichtung nach Anspruch 6, d a d u r c h   g e -
k e n n z e i c h n e t ,   daß das Schieberegister ein
elektromechanisches Schieberegister (121, 127, 128) ist,
bestehend aus

a) einem Elektromagneten (127), der mit dem Bremssignalgeber (125) verbunden ist,

b) einer Làmellenscheibe (121) mit federnden, metallischen Lamellen (123), die an dem Elektromagneten (127)
vorbeibewegbar sind,

c) einem Elektromagneten (115), der von einem Oszillator
(105) angesteuert wird und mit dem die Lamellenscheibe
(121) antreibbar ist,

d) und einem am Außenbereich der Lamellenscheibe (121) umlaufenden feststehenden Kragen (128), auf den die Lamellen (123) durch die Magnetwirkung des Elektromagneten
(127) gehoben werden können.

10. Vorrichtung nach einem der Ansprüche 6 bis 11,   d a -
d u r c h   g e k e n n z e i c h n e t ,   daß als Bremssignalgeber der Bremslichtschalter verwendet wird.

11. Vorrichtung nach einem der Ansprüche 6 bis 10,   d a -
d u r c h   g e k e n n z e i c h n e t ,   daß als Bremslichtschalter ein hydraulischer Schalter im Bremskreis verwendet wird.

# AUDI NSU AUTO UNION  🅰Audi

Aktiengesellschaft

AUDI NSU AUTO UNION Aktiengesellschaft · 8070 Ingolstadt

Europäisches Patentamt
Zweigstelle Den Haag
P.B. 5818 Patentlaan, 2

2280 HV RIJSWIJK (ZH)

Niederlande

EPA-EPO-OEB
D G 1
~ ~·ıı le
1 5 AVR. 1980

· Telefon: Ingolstadt (0841) 891
Durchwahl siehe Hausapparat
Telegramm: AUDINSU Ingolstadt

| Ihre Zeichen | Ihre Nachricht vom | Unser Hausapp. | Unser Telex | Unsere Abt. | Unsere Zeichen | Ingolstadt |
|---|---|---|---|---|---|---|
| | 08.04.80 | 89- 3110 | 5505- 40 | I/EXP | DrBa/Dö | 11.04.80 |
| | | | | | IP 1587/1657 EP | |

Aktenzeichen: 80 101 262.6,
auf die Mitteilung vom 8. April 1980

Der Berichtigung wird stattgegeben.
R.K. Verhage/Eingangsstelle/
Den Haag, den 6. Juni 1980.

Es wird gebeten, die ursprüngliche Seite 10 durch die beigefügte Seite 10 zu ersetzen und die gezahlte Anspruchsgebühr in Höhe von 50,- DM im Hinblick auf diese Änderung nicht zurückzuzahlen.

B e g r ü n d u n g :

Die beigefügte Seite 10 unterscheidet sich von der ursprünglichen dadurch, daß das Kennzeichen des Anspruchs 4 gekürzt wurde und daß der weggelassene Teil des ursprünglichen Anspruchs 4 einen Teil des Kennzeichens des neuen Anspruchs 5 bildet.

Die Änderung ist durch einen offensichtlichen Fehler in den ursprünglichen Unterlagen bedingt. Der Fehler ist zunächst dadurch offensichtlich, daß dem Anspruch 4 der ursprünglichen Unterlagen unmittelbar der Anspruch 6 nachgestellt ist und desweiteren ist das Kennzeichen des Anspruchs 4 in sich widersinnig, da vom Taktgeber erzeugte Taktsignale entweder in ihrem zeitlichen Abstand konstant sein können oder einer vom Fahrzeug zurückgelegten Wegstrecke entsprechen können. Beides zusammen ist nicht möglich. Das Kennzeichen des neuen Anspruchs 4

<center>- 2 -</center>

Vorsitzender des Aufsichtsrates: Toni Schmücker
Vorstand: Dr. Wolfgang R. Habbel, Vorsitzender
Rudolf Gerich · Hans Kialka · Günther Kurrle
Dipl.-Ing. Ferdinand Piëch · Dr. Martin Posth

Sitz der Gesellschaft: Neckarsulm
Eingetragen im Handelsregister
des Amtsgerichts Heilbronn/Neckar
unter HRB Blatt 180

0017755

und des neuen Anspruchs 5 ergibt sich aus der vorliegenden Beschreibung,
Seite 2, Zeile 36 bis Seite 3, Zeile 5.

Die beantragte Änderung ist somit eine Berichtigung von Mängeln in den beim
Europäischen Patentamt eingereichten Unterlagen, welche nach Regel 88
AusfOEPÜ zulässig ist.


AUDI NSU AUTO UNION
Aktiengesellschaft
AV Nr.172


Dr. Barske


Anlage
Seite 10, 3-fach.

Fig.1

Taktgeber  (2)

Zähler  (8)

△ T  (12)

Verzögerung  (20)

# Fig.2

**Fig.3**

3/3

**Fig.4**

0017755

# EUROPÄISCHER RECHERCHENBERICHT

**Europäisches Patentamt**

Nummer der Anmeldung

EP 80 10 1262.6

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - B - 1 140 382 (F. STOURAC)<br>* Ansprüche 1, 3; Spalte 3, Zeilen 34 bis 45; Fig. *<br>-- | 1,2,<br>5,6,9 |
| | DE - B - 2 333 970 (M. AMSLER)<br>* Spalte 4, Zeilen 28 bis 39; Spalte 5, Zeilen 23 bis 28; Fig. *<br>-- | 1,2,5,<br>6,9,10 |
| | DE - B2 - 2 322 299 (GENERAL MOTORS CORP.)<br>* Anspruch; Spalte 6, Zeile 64 bis Spalte 8, Zeile 7; Fig. *<br>-- | 1,2,<br>6,7 |
| | FR - A - 2 221 055 (ETS J. RICHARD)<br>* Anspruch; Seite 5, Zeilen 12 bis 24; Fig. 2, 3 *<br>-- | 1,2,10 |
| | FR - A - 2 200 997 (DE REVIERS DE MAUNY)<br>* Ansprüche 1, 17 *<br>-- | 1,11 |
| | CH - A5 - 559 394 (F. TRACHSEL)<br>* Patentanspruch; Fig. *<br>---- | 1,5 |

### KLASSIFIKATION DER ANMELDUNG (Int.Cl.3)

G 07 C 5/08
G 01 P 1/12

### RECHERCHIERTE SACHGEBIETE (Int. Cl.3)

B 60 Q 9/00
B 60 R 27/00
B 60 T 7/00
B 60 T 8/00
B 62 D 41/00
G 01 P 1/00
G 07 C 5/00

### KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 30-06-1980 | LEITZ |

EPA form 1503.1 06.78